# EUROPEAN PATENT APPLICATION

(11) **EP 3 855 618 A1**
(43) Date of publication of application: **28.07.2021**
(21) Application number: 19861747.4
(22) Date of filing: 01.08.2019
(51) Int. Cl.: H02S 40/34, H02S 50/00

(54) **SOLAR CELL MODULE**

(30) Priority: 21.09.2018 JP 2018177307
(71) Applicant: Panasonic Corporation, Kadoma-shi Osaka 571-8501 (JP)
(72) Inventor: KUBO, Koichi, Osaka-shi, Osaka 540-6207 (JP); YOSHIDA, Tomohide, Osaka-shi, Osaka 540-6207 (JP); HIGUCHI, Minoru, Osaka-shi, Osaka 540-6207 (JP)
(74) Representative: Müller-Boré & Partner Patentanwälte PartG mbB
(86) International application number: PCT/JP2019/030243
(87) International publication number: WO 2020/059316

(57) **Abstract**

A solar cell module according to an example of an embodiment comprises a junction box and a plurality of strings including a plurality of solar cells and wiring. The junction box includes: a plurality of terminals; an output line; a plurality of bypass diodes; a detection unit that detects the temperature of at least one of the plurality of bypass diodes; a processing unit that outputs identification information and detection information through the output line to an external device; and a case body. The minimum distance between the processing unit and the plurality of bypass diodes is longer than that between the detection unit and the plurality of bypass diodes.

## Description

### TECHNICAL FIELD

The present disclosure relates to a solar cell module.

### BACKGROUND

In the related art, solar cell modules are widely known which have a terminal box including bypass diodes which are connected in parallel with respect to a plurality of strings in which a plurality of solar cells are connected in series (for example, see Patent Literature 1). There may be cases in which, when some of the solar cells of the solar cell module are shadowed by an obstacle, and power generation consequently becomes insufficient, and heat may be generated in the cell, resulting in a phenomenon called a hot spot. In consideration of this, a bypass diode is connected which is reversely biased with respect to an output of the solar cell during the normal time, so that a string including the solar cell having a reduced amount of power generation is avoided (bypassed) in the flow of the current, to thereby prevent occurrence of the hot spot. That is, in this case, the current flows through the bypass diode.

In a state in which the current flows through the bypass diode, a part of the strings which is bypassed does not contribute to power generation, and thus, such a state is desirably resolved quickly. When the current flows through the bypass diode, a temperature of the diode is increased. Therefore, by detecting the temperature increase and transmitting the detected information to an external device, it becomes possible to quickly understand that a part of the strings is being bypassed, and the problem can be appropriately handled.

### CITATION LIST

### PATENT LITERATURE

Patent Literature 1: JP 2013-030627 A

### SUMMARY

### TECHNICAL PROBLEM

In order to detect the temperature of the bypass diode and to transmit the detected information to an external device, a detector which detects the temperature of the diode and a processor which processes a signal of the detector and transmits the processed signal to the external device must be provided on the solar cell module. However, a semiconductor element which forms the processor is in general vulnerable to heat, and it is necessary to prevent damage to the processor due to the heat. In addition, it is important to accurately detect the temperature of the bypass diode without causing disadvantages such as an increase in weight and an increase in cost of the solar cell module.

### SOLUTION TO PROBLEM

According to one aspect of the present disclosure, there is provided a solar cell module including: a plurality of strings each including a plurality of solar cells and a plurality of wiring members, and in which adjacent solar cells are connected in series by the wiring members; and a terminal box including a plurality of terminal portions to which an output wiring member which extends from at least one of the plurality of strings is electrically connected. The terminal box includes: an output line which electrically connects the plurality of terminal portions and a direct current-to-alternate current conversion device provided outside of the solar cell module; a plurality of bypass diodes which are electrically connected to the plurality of terminal portions and which are electrically connected in parallel with the plurality of strings; a detector which detects a temperature of at least one of the plurality of bypass diodes; a processor which outputs identification information and detected information to an external device through the output line; and a housing which houses at least the plurality of terminal portions and the plurality of bypass diodes. A shortest distance among distances between the processor and the plurality of bypass diodes is longer than a shortest distance among distances between the detector and the plurality of bypass diodes.

### ADVANTAGEOUS EFFECTS

According to a solar cell module of the present disclosure, a temperature of a bypass diode can be detected quickly and accurately, while preventing damage and erroneous operation of a processor due to heat.

### BRIEF DESCRIPTION OF DRAWINGS

FIG. 1 is a plan view of a solar cell module according to an embodiment of the present disclosure, viewed from a light-receiving surface side, and enlarging a terminal box and a periphery thereof.
FIG. 2 is a plan view of a terminal box according to an embodiment of the present disclosure.
FIG. 3 is a diagram showing an alternative configuration of a terminal box.
FIG. 4 is a diagram showing another alternative configuration of a terminal box.
FIG. 5 is a diagram showing yet another alternative configuration of a terminal box.

### DESCRIPTION OF EMBODIMENTS

A solar cell module according to an embodiment of the present disclosure will now be described in detail with reference to the drawings. Drawings referred to in the description of the embodiment are schematically shown, and sizes, ratios, or the like of constituent elements shown in the drawings may differ from those of an actual device. The specific size, ratio, or the like should be determined in consideration of the description of the embodiment. A solar cell module of the present disclosure is not limited to the embodiment described below, and a combination of constituent elements of a plurality of embodiments described below, or deletion of some of the constituting elements, are also contemplated.

In the present disclosure, a "light-receiving surface" of a solar cell module and a solar cell refers to a surface on which solar light is primarily incident (50% or more to 100%), and a "back surface" refers to a surface on a side opposite to the light-receiving surface. The terms of the light-receiving surface and the back surface are also used for other constituent elements of the terminal box or the like.

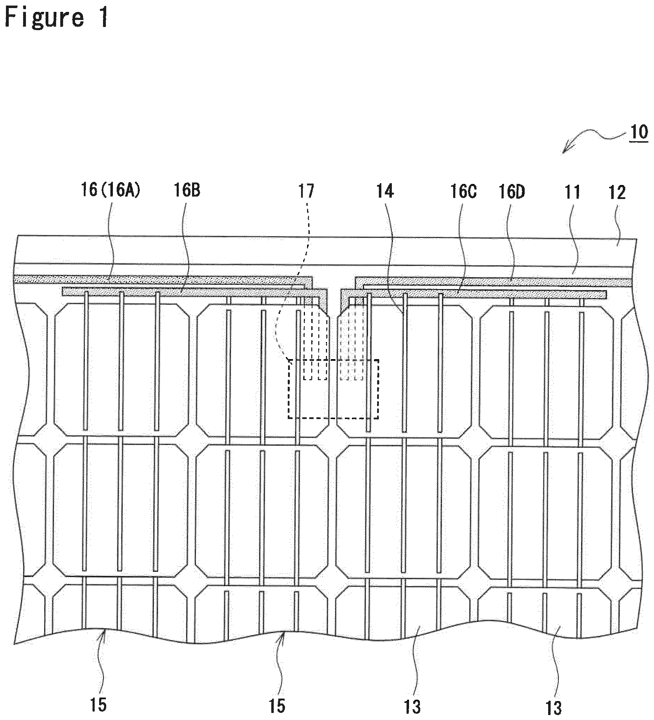

As exemplified in FIG. 1, a solar cell module 10 includes a solar cell panel 11, and a frame 12 provided at a circumference of the solar cell panel 11. The solar cell panel 11 includes a plurality of solar cells 13, a first protective member provided on a light-receiving surface side of the solar cell 13, and a second protective member provided on a back surface side of the solar cell 13. The plurality of solar cells 13 are sandwiched by the first protective member and the second protective member, and are sealed by an encapsulant material filled between the protective members. Alternatively, the solar cell module 10 may be a frameless module, having no frame 12.

The solar cell 13 has a photovoltaic portion for receiving the solar light and generating carriers. The photovoltaic portion includes, for example, a semiconductor substrate, and an amorphous semiconductor layer formed over the semiconductor substrate. In the photovoltaic portion, a light-receiving surface electrode is formed over a light-receiving surface, and a back surface electrode is formed over a back surface. The back surface electrode is formed in a larger area than the light-receiving surface electrode. The electrode may include a plurality of fingers and a plurality of bus bars. The fingers are narrow line-shaped electrodes formed over a wide range over the photovoltaic portion, and the bus bars are electrodes which collect carriers from the fingers. No particular limitation is imposed on the structure of the solar cell 13, and, alternatively, for example, a structure may be employed in which the electrode is formed only over the back surface of the photovoltaic portion. Alternatively, a transparent conductive layer may be formed over the amorphous semiconductor layer.

For the first protective member, a member which is transparent to light may be used, such as a glass substrate, a resin substrate, a resin film, or the like. Of these, from viewpoints of heat-resistance and endurance, the glass substrate is desirably used. For the second protective member, the same transparent member as that of the first protective member may be used, or a non-transparent member may be used. An example of the second protective member is a resin film. Examples of the resin applied for the encapsulant material are polyolefin, ethylene-vinyl acetate copolymer (EVA), and the like.

The solar cell module 10 includes a plurality of strings 15 each having a plurality of the solar cells 13 and a plurality of wiring members 14, and in which adjacent solar cells 13 are connected in series by the wiring member 14. The wiring member 14 is an elongated conductor line generally having, as a primary composition, a metal such as aluminum or copper or the like, and is also called an interconnector or a cell tab. The wiring member 14 is bent in a thickness direction of the solar cell module 10 at a position between the adjacent solar cells 13, and is electrically connected to a light-receiving surface of one of the solar cells 13 and a back surface of the other of the solar cells 13 by a conductive adhesive or the like, such as a solder. For example, three bus bars are provided over each surface of the photovoltaic portion, and the wiring member 14 is electrically connected over each bus bar.

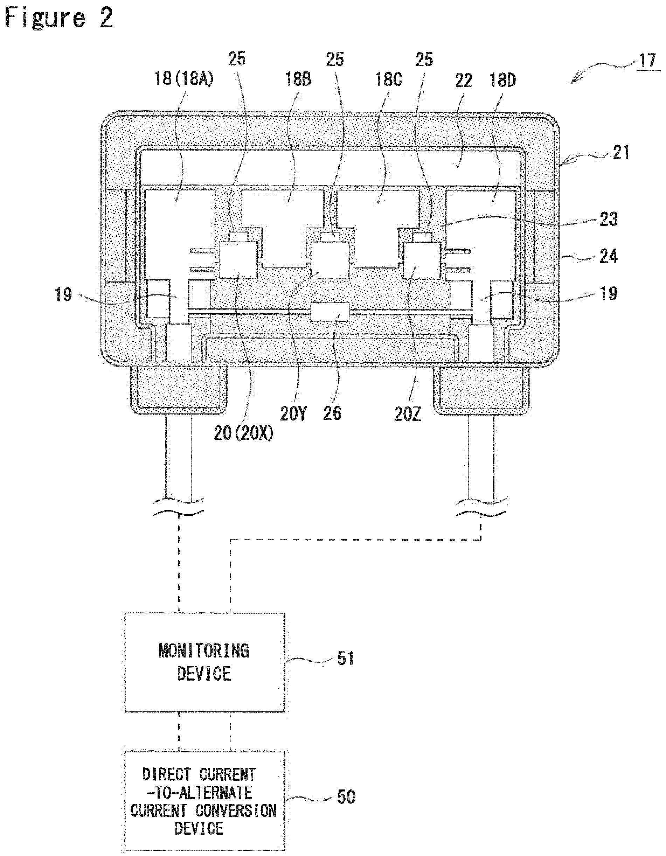

The solar cell module 10 has a terminal box 17 which includes a plurality of terminal portions 18 (see FIG. 2 to be described later) to which an output wiring member 16 which extends from at least one of the plurality of strings 15 is electrically connected. The terminal box 17 is fixed to the back surface of the solar cell panel 11 using, for example, an adhesive. The output wiring member 16 is electrically connected to the plurality of strings 15, and extracts, through a portion thereof, electric power generated by the plurality of strings 15 to an outside of the solar cell panel 11. The output wiring member 16 is connected to the wiring member 14 extending from an end of a solar cell 13 placed at an end of the string 15, extends to the back surface side of the solar cell panel 11, and is connected to the terminal portion 18 of the terminal box 17.

The solar cell module 10 generally includes a bridge wiring member which electrically connects adjacent strings 15. In the present embodiment, six strings 15 are provided, and these six strings 15 are connected in series by a plurality of bridge wiring members. Four output wiring members 16 are provided, and of these, an output wiring member 16B and an output wiring member 16C also function as the bridge wiring member connecting the adjacent strings 15. In a normal power generation state, a current flows through a circuit formed by a set of strings 15 which are connected in series, and output wiring members 16A and 16B connected to the ends of the strings 15.

As exemplified in FIG. 2, the terminal box 17 has a plurality of terminal portions 18, an output line 19 which electrically connects the plurality of terminal portions 18 and a direct current-to-alternate current conversion device 50 which is outside of the module, a plurality of bypass diodes 20 which are connected in parallel with the plurality of strings 15, and a housing 21. One bypass diode 20 is electrically connected to two terminal portions 18. The output wiring member 16 is electrically connected to the terminal portion 18 by welding or a solder. The output wiring member 16A is connected to a terminal portion 18A, the output wiring member 16B is connected to a terminal portion 18B, the output wiring member 16C is connected to a terminal portion 18C, and the output wiring member 16D is connected to a terminal portion 18D.

The terminal box 17 further includes a detector 25 which detects a temperature or an abnormal state of at least one of the plurality of bypass diodes 20, and a processor 26 which outputs identification information and detected information of the detector 25 to a monitoring device 51 via the output line 19. The monitoring device 51 is, for example, a controller, a server, or the like of an energy management system for monitoring a power generation state of the solar cell module 10. Alternatively, the monitoring device 51 may be a tablet terminal, a smartphone, or the like. Alternatively, the detected information of the detector 25 may be output to any of various external devices other than the monitoring device 51.

As a method of transmitting a signal including predetermined information from the processor 26 to the monitoring device 51 through the output line 19, which is an electric power line, low-speed power-line carrier communication (low-speed PLC), high-speed power-line carrier communication (high-speed PLC), or the like, which are known, may be used. The monitoring device 51 has, for example a PLC modem which includes a filter for separating the power line voltage and the signal.

In FIG. 2, the direct current-to-alternate current conversion device 50 is shown at a downstream side of the monitoring device 51, but no particular limitation is imposed on a connection relationship between the direct current-to-alternate current conversion device 50 and the monitoring device 51. The output line 19 may be connected in parallel with respect to the direct current-to-alternate current conversion device 50 and the monitoring device 51. The direct current-to-alternate current conversion device 50 is a device which converts a direct current electric power generated by the solar cell module 10 into an alternate current electric power used by normal electronic equipment, and is generally called a power conditioner.

The plurality of terminal portions 18 are connected in series to each other through the plurality of bypass diodes 20, to thereby form a detour path when an abnormality occurs in some of the solar cells 13. The detour path is formed by connecting the bypass diode 20 in parallel with respect to a group formed by two adjacent strings 15. In the present embodiment, four terminal portions 18 are provided, three bypass diodes 20 are provided, and the set of strings 15 includes three groups (clusters).

The plurality of bypass diodes 20 are connected in parallel with each cluster in a reversely biased state with respect to an output of each solar cell 13 at the normal time. In the present embodiment, four terminal portions 18 are placed in one line, and the output lines 19 are connected respectively to the terminal portions 18A and 18D placed on both ends of the line. A bypass diode 20X is connected to the terminal portions 18A and 18B, a bypass diode 20Y is connected to the terminal portions 18B and 18C, and a bypass diode 20Z is connected to the terminal portions 18C and 18D.

The housing 21 of the terminal box 17 houses at least the plurality of terminal portions 18 and the plurality of bypass diodes 20. Further, in the present embodiment, the detector 25 and the processor 26 are also housed in the housing 21. The housing 21 includes a base portion 23 having an approximate quadrangular shape in a plan view, and in which the terminal portion 18, the bypass diode 20, or the like are placed, and a side wall portion 24 provided upright at a circumferential portion of the base portion 23.

A large opening is formed on a surface of the housing 21 facing the side of the solar cell panel 11, and the opening is closed by the panel when the housing 21 is attached to the back surface of the solar cell panel 11. In the base portion 23, an opening 22 for allowing the output wiring member 16 to pass through is formed, which is long in a direction of arrangement of the plurality of terminal portions 18. A silicone resin or the like is filled in the terminal box 17 to close the opening 22, and the terminal portion 18, the bypass diode 20, and the like are sealed in this manner.

When the power generation state of the solar cell module 10 is normal, no current flows through the bypass diode 20, and no current flows through the output wiring members 16B and 16C and the terminal portions 18B and 18C. On the other hand, when some of the solar cells 13 are shaded by an obstacle and the power generation becomes insufficient, the cell becomes a resistive element which consumes electric power and causes a reverse bias, and thus, the bypass diode 20 is activated. With this process, the string 15 (cluster) including the corresponding solar cell 13 is bypassed. When the current flows through the bypass diode 20, the temperature of the bypass diode 20 is increased. Thus, by detecting the temperature increase and transmitting the detected information to the monitoring device 51, it becomes possible to quickly understand that some of the strings 15 are being bypassed, and to appropriately handle the problem.

As described above, the terminal box 17 includes the detector 25 and the processor 26. The detector 25 detects the temperature increase of the bypass diode 20, and the processor 26 processes the detection signal and transmits the processed signal to the monitoring device 51. The detector 25 and the processor 26 are connected to each other by a cable (not shown), and the detection signal of the detector 25 is output to the processor 26. Desirably, a plurality of detectors 25 are provided in order to detect the temperatures of each of the plurality of bypass diodes.

The detector 25 includes, for example, a semiconductor element such as a thermistor which can detect the temperature of the bypass diode 20. The detector 25 is desirably placed near the bypass diode 20 in order to accurately measure the temperature of the bypass diode 20. The detector 25 may be fixed on a surface of the bypass diode 20, or may be fixed on the base portion 23 of the housing 21 near the bypass diode 20. In the present embodiment, the detectors 25 are provided in the same number as the bypass diodes 20. Each of the plurality of detectors 25 outputs a detection signal of the temperature or the abnormal state of the bypass diode 20, along with an identification signal (addresses), to the processor 26. Alternatively, each detector 25 may output various identification information other than the detector information.

The processor 26 includes, for example, a semiconductor element which processes the detection signal of the detector 25 and transmits the processed signal to the monitoring device 51. The processor 26 is electrically connected to the output line 19, and transmits the identification information of the detector 25 and the detected information to the monitoring device 51 through the output line 19. That is, the identification information for specifying the detector 25 and the detected information related to the temperature of the bypass diode 20 are transmitted to the monitoring device 51 in a state in which the identification information and the detected information are correlated to each other by the processor 26. The identification information may include identification information for specifying the solar cell module 10 equipped with the terminal box 17 or information related to the identification information. For example, the information may be a product number, a manufacturing date, or the like.

The processor 26 is formed from, for example, a microcomputer, and includes a processor (CPU) which is a calculation processor, a storage formed form a RAM, a ROM, or the like, an input/output port, or the like. The CPU has a function to read a control program which is stored in the storage in advance, and to execute the control program. The processor 26 (CPU) may include a switching element for producing a signal including the detected information by being switched ON and OFF based on the detection signal of the detector 25.

A shortest distance L1 among distances between the processor 26 and the plurality of bypass diodes 20 is longer than a shortest distance L2 among distances between the detectors 25 and the plurality of bypass diodes 20. The detector 25 is desirably placed near the bypass diode 20, but, because the semiconductor element of the processor 26 is more vulnerable to heat in comparison to the semiconductor element of the detector 25, the processor 26 is desirably placed at a position distanced from the bypass diode 20. Therefore, the processor 26 is disposed in such a manner that the shortest distance L1 > the shortest distance L2. With such a configuration, the temperature of the bypass diode 20 can be accurately detected while preventing damage and erroneous operation of the processor 26 due to the heat of the bypass diode 20.

In the example configuration of FIG. 2, in a plan view of the terminal box 17, the bypass diode 20Y and the processor 26 are placed in an aligned manner in a direction (hereinafter, referred to as a "longitudinal direction") orthogonal to a direction of arrangement of the bypass diodes 20X, 20Y, and 20Z (hereinafter, referred to as a "lateral direction"). The terminal portion 18 and the bypass diode 20 are placed at a center portion in a longitudinal direction of the housing 21. The processor 26 is placed with a longer spacing than the shortest distance L2, among the distances between the detectors 25 and the bypass diodes 20, to the bypass diode 20Y which is closest to the processor 26 among the bypass diodes 20. The processor 26 may be placed to not overlap the bypass diode 20 in the longitudinal direction.

The processor 26 is placed at one end side in the longitudinal direction of the housing 21 from which the output line 19 extends. With such a configuration, the processor 26 can be easily connected to the output line 19. The processor 26 may be fixed on the base portion 23 of the housing 21, or may be fixed on the side wall portion 24. Alternatively, the processor 26 may be placed in such a manner that the shortest distance L1 among the distances between the processor 26 and the plurality of bypass diodes 20 is longer than a shortest distance L3 among the distances between the detectors 25.

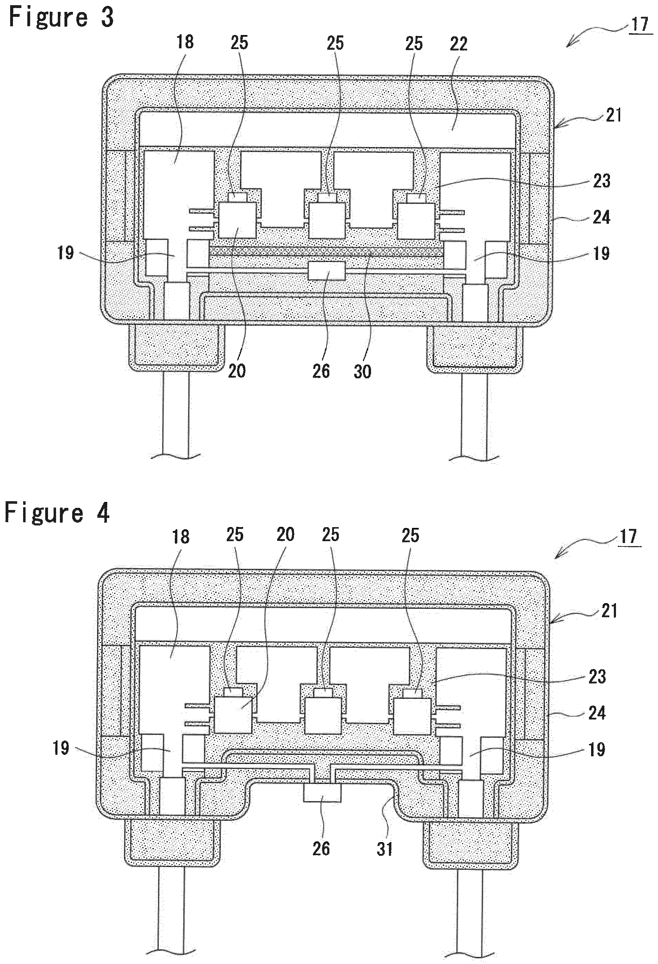

As exemplified in FIG. 3, the terminal box 17 may include a shielding wall 30 provided between the processor 26 and the plurality of bypass diodes 20. The shielding wall 30 is provided along the lateral direction in which the plurality of bypass diodes 20 are arranged, to isolate the processor 26 and the bypass diodes 20. The shielding wall 30 is provided, for example, upright on the base portion 23, and abutting the back surface of the solar cell panel 11. By providing the shielding wall 30, it becomes possible to block the heat from the bypass diode 20, and to thereby reduce transfer of heat to the processor 26.

As exemplified in FIG. 4, the processor 26 may be placed on an outer surface of the housing 21. In this case, the shortest distance L1 among the distances between the processor 26 and the plurality of bypass diodes 20 is elongated in comparison to the case in which the processor 26 is placed inside the housing 21, and the thermal effect on the processor 26 can be further reduced by a heat dissipation effect by the housing 21. A recess 31 formed by recessing the side wall portion 24 to the inside may be formed on the housing 21, and the processor 26 may be attached in the recess 31. The processor 26 is fixed on the outer surface of the housing 21 using, for example, an adhesive.

In order to improve the heat dissipation characteristic of the housing 21, desirably, a metal housing, a heat dissipation sheet, or the like is used.

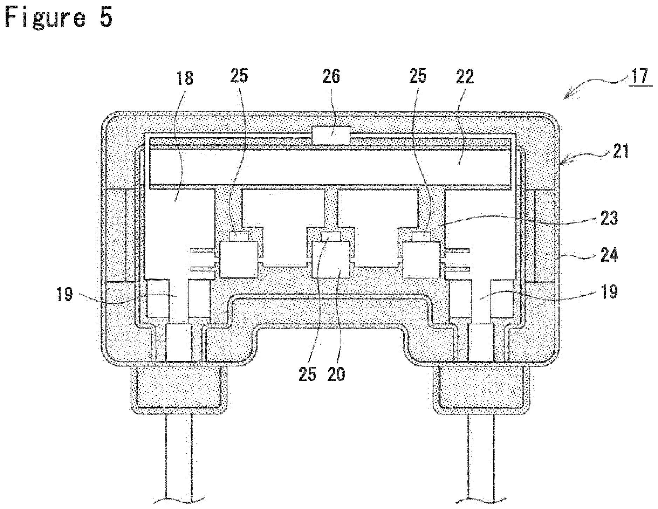

As exemplified in FIG. 5, the processor 26 may be placed at an opposite side to the plurality of bypass diodes 20, with the opening 22, for letting the output wiring member 16 to pass through, therebetween. The opening 22 and the terminal portion 18 are present between the processor 26 and the bypass diode 20. In this case, the shortest distance L1 among the distances between the processor 26 and the plurality of bypass diodes 20 can be elongated, and a thermal conductivity can be reduced due to the opening 22. Thus, the thermal effect on the processor 26 can further be reduced. The processor 26 is fixed, for example, using an adhesive or the like, on the side wall portion 24 provided at an edge of the opening 22. In the example configuration of FIG. 5, the processor 26 is connected to the output line 19 through the terminal portion 18.

As described, according to the solar cell module 10 having the above-described structure, the temperature or the abnormality state of the bypass diode 20 can be detected quickly and accurately by the detector 25 while preventing damages and erroneous operation of the processor 26 due to the heat of the bypass diode 20. By detecting the temperature increase of the bypass diode 20 and transmitting the detected information to the monitoring device 51, bypassing of some of the strings 15 can be quickly understood, and the problem can be appropriately handled.

### REFERENCE SIGNS LIST

10 SOLAR CELL MODULE; 11 SOLAR CELL PANEL; 12 FRAME; 13 SOLAR CELL; 14 WIRING MEMBER; 15 STRING; 16 OUTPUT WIRING MEMBER; 17 TERMINAL BOX; 18 TERMINAL PORTION; 19 OUTPUT LINE; 20 BYPASS DIODE; 21 HOUSING; 22 OPENING; 23 BASE PORTION; 24 SIDE WALL PORTION; 25 DETECTOR; 26 PROCESSOR; 30 SHIELDING WALL; 50 DIRECT CURRENT-TO-ALTERNATE CURRENT CONVERSION DEVICE; 51 MONITORING DEVICE.

## Claims

1. A solar cell module comprising:
a plurality of strings each including a plurality of solar cells and a plurality of wiring members, and in which adjacent solar cells are connected in series by the wiring member; and
a terminal box including a plurality of terminal portions to which an output wiring member which extends from at least one of the plurality of strings is electrically connected, wherein
the terminal box comprises:
an output line which electrically connects the plurality of terminal portions and a direct current-to-alternate current conversion device provided outside of the solar cell module;
a plurality of bypass diodes which are electrically connected to the plurality of terminal portions and which are electrically connected in parallel with the plurality of strings;
a detector which detects a temperature of at least one of the plurality of bypass diodes;
a processor which outputs identification information and detected information to an external device through the output line; and
a housing which houses at least the plurality of terminal portions and the plurality of bypass diodes, and
a shortest distance among distances between the processor and the plurality of bypass diodes is longer than a shortest distance among distances between the detector and the plurality of bypass diodes.

2. The solar cell module according to claim 1, wherein
the identification information includes at least one of identification information of the detector or identification information of the solar cell module.

3. The solar cell module according to claim 1 or 2, wherein
a plurality of the detectors are provided, and
the shortest distance among the distances between the processor and the plurality of bypass diodes is longer than a shortest distance among distances between the detectors.

4. The solar cell module according to any one of claims 1 to 3, wherein
the processor is placed on an outer surface of the housing.

5. The solar cell module according to any one of claims 1 to 3, wherein
an opening into which the output wiring member is inserted is formed on the terminal box, and
the processor is placed at a side opposite to the plurality of bypass diodes with the opening therebetween.

6. The solar cell module according to any one of claims 1 to 3, wherein
the terminal box includes a shielding wall provided between the processor and the plurality of bypass diodes.
